# EUROPEAN PATENT APPLICATION

(11) **EP 4 800 259 A1**
(43) Date of publication of application: **02.09.2026**
(21) Application number: 26155711.0
(22) Date of filing: 02.02.2026
(51) Int. Cl.: F16D 3/205

(54) **SEAL PLATE, OUTER JOINT MEMBER, CONSTANT VELOCITY UNIVERSAL JOINT, AND POWER TRANSMISSION MECHANISM**

(30) Priority: 28.02.2025 JP 2025031644
(71) Applicant: NTN Corporation, Osaka-shi, Osaka 530-0005 (JP)
(72) Inventor: Nakagawa, Toru, Iwata-shi, Shizuoka, 4388510 (JP)
(74) Representative: Grünecker Patent- und Rechtsanwälte PartG mbB

(57) **Abstract**

In a seal plate (19) press-fitted and fixed to an inner peripheral surface of an outer joint member (2) for a constant velocity universal joint, an outer peripheral surface of the seal plate (19) in contact with the inner peripheral surface of the outer joint member (2) has a surface hardness of 140 Hv or more and 160 Hv or less.

## Description

### Technical Field

The present invention relates to a seal plate press-fitted into an inner peripheral surface of an outer joint member for a constant velocity universal joint, an outer joint member including the seal plate, a constant velocity universal joint, and a power transmission mechanism.

### Background Art

As a member constituting a power transmission system for automobiles and various industrial machines, a plunging type constant velocity universal joint that transmits rotational torque at a constant velocity while allowing angular displacement and axial displacement between two shafts on a driving side and a driven side is known.

The plunging type constant velocity universal joint mainly includes an outer joint member, an inner joint member housed in the outer joint member, a torque transmitting member that transmits torque between the outer joint member and the inner joint member, and the like.

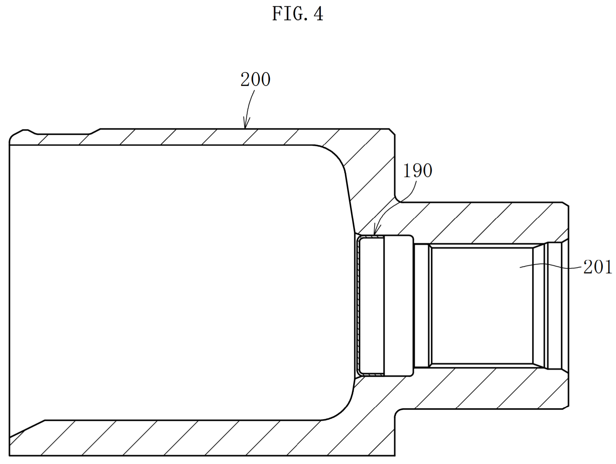

For example, in a plunging type constant velocity universal joint used for a drive shaft of an automobile, an outer joint member is connected to a driving shaft on a differential gear device side. As one of the connection structures with the driving shaft, there is a configuration in which a spline-shaped connection hole 201 is provided at one end in an axial direction of an outer joint member 200 as illustrated in FIG. 4. Such a spline-shaped connection hole 201 is usually formed to penetrate the outer joint member 200 by broaching. Therefore, in the outer joint member 200 having the connection hole 201, as illustrated in FIG. 4, a seal plate 190 is press-fitted into the outer joint member 200 to seal the connection hole 201 by the seal plate 190 so that a lubricant, such as grease, to be filled inside does not leak to the outside through the connection hole 201.

Patent Literature 1 (JP 2009-58014 A) proposes, as a measure for improving sealability of a seal plate, a configuration in which an outer peripheral surface of a seal plate and an inner peripheral surface of an outer joint member (outer member) are tapered surfaces increasing in diameter toward the inside of a joint. In this case, even when a gap is generated between the outer peripheral surface of the seal plate and the inner peripheral surface of the outer joint member and the lubricant enters the gap, the lubricant is pressed against the tapered surface of the outer joint member by the centrifugal force occurring when the joint rotates, and the lubricant is pushed back into the joint along the inclination of the tapered surface.

### Citation List

Patent Literature 1: JP 2009-58014 A

### Summary of Invention

### Technical Problem

Incidentally, one of the factors that deteriorates the sealability of the seal plate is scratching of the seal plate at the time of press-fitting.

In general, since the outer joint member is made of medium-carbon steel, high-carbon steel, or the like having a higher hardness than the seal plate, when the seal plate is press-fitted into the outer joint member, the outer peripheral surface of the seal plate comes into contact with the inner peripheral surface of the outer joint member, so that the outer peripheral surface of the seal plate having a relatively low hardness may be damaged. When scratches are generated in the seal plate, a lubricant may leak to the outside through the scratches. A base oil or the like separated from the lubricant may ooze out through the scratches.

As a method of improving the sealability, there are methods of adding an O-ring to an outer peripheral surface of a seal plate and applying a liquid packing to the outer peripheral surface of the seal plate; however, these methods require an additional step of forming a groove for attaching the O-ring to the outer peripheral surface of the seal plate or applying the liquid packing to the outer peripheral surface of the seal plate, and thus have a problem of an increase in manufacturing cost due to the additional step and an increase in the number of parts. There is also a method of integrally joining a seal member to an outer peripheral surface of a seal plate by vulcanization bonding, but this method also has a problem of an increase in manufacturing cost. When the outer peripheral surface of the seal plate is formed into a tapered surface as in Patent Literature 1, the shape of the seal plate is changed, which causes a problem of cost increase.

Therefore, an object of the present invention is to improve sealability of a seal plate while suppressing an increase in manufacturing cost.

### Solution to Problem

In order to solve the above problems, the present invention is a seal plate press-fitted and fixed to an inner peripheral surface of an outer joint member for a constant velocity universal joint, in which an outer peripheral surface of the seal plate in contact with the inner peripheral surface of the outer joint member has a surface hardness of 140 Hv or more and 160 Hv or less.

As described above, by setting the surface hardness of the outer peripheral surface of the seal plate to 140 Hv or more and 160 Hv or less, a hardness difference between the inner peripheral surface of the outer joint member and the outer peripheral surface of the seal plate can be reduced as compared with the conventional seal plate. As a result, it is possible to suppress scratching of the outer peripheral surface of the seal plate due to contact between the outer peripheral surface of the seal plate and the inner peripheral surface of the outer joint member at the time of press-fitting, and thus, the sealability of the seal plate can be improved. In the present invention, since the sealability can be improved only by changing the material of the seal plate to a material having a high hardness, it is not necessary to add a component or add a manufacturing process, and the manufacturing cost can be reduced. Therefore, according to the present invention, it is possible to improve sealability of a seal plate while suppressing an increase in manufacturing cost.

A hardness difference between the inner peripheral surface of the outer joint member and the outer peripheral surface of the seal plate is preferably 130 Hv or more and 200 Hv or less.

As described above, by setting the hardness difference between the inner peripheral surface of the outer joint member and the outer peripheral surface of the seal plate to 130 Hv or more and 200 Hv or less, it is possible to effectively suppress scratching of the outer peripheral surface of the seal plate.

The hardness difference between the inner peripheral surface of the outer joint member and the outer peripheral surface of the seal plate is more preferably 130 Hv or more and 170 Hv or less.

By setting the hardness difference between the inner peripheral surface of the outer joint member and the outer peripheral surface of the seal plate to 130 Hv or more and 170 Hv or less, the outer peripheral surface of the seal plate is further less likely to be scratched, so that further improvement in sealability can be expected.

The seal plate according to the present invention is preferably formed of a press-molded product including a hard treatment layer on a surface thereof.

Since the seal plate includes a hardened layer on the surface thereof, the hardened layer can enter a minute gap between the outer joint member and the seal plate at the time of press-fitting and fill the gap, so that the sealability is further improved and the leakage of a lubricant from the outer joint member can be more reliably suppressed.

The seal plate according to the present invention may include a base material that is a press-molded product of cold-rolled steel, and a hard treatment layer formed on a surface of the base material.

By using the outer joint member for a constant velocity universal joint in which the seal plate according to the present invention is press-fitted into the inner peripheral surface, the leakage of a lubricant from the outer joint member to the outside can be suppressed, so that reliability is improved.

The seal plate according to the present invention may be applied to a constant velocity universal joint including an outer joint member, an inner joint member disposed inside the outer joint member, and a torque transmitting member that transmits torque between the outer joint member and the inner joint member. Also in this case, the leakage of a lubricant from the outer joint member to the outside can be suppressed, and thus reliability is improved.

The seal plate according to the present invention may be applied to a power transmission mechanism including a constant velocity universal joint and a shaft connected to an inner joint member of the constant velocity universal joint. Also in this case, the leakage of a lubricant from the outer joint member to the outside can be suppressed, and reliability is improved.

### Advantageous Effects of Invention

According to the present invention, it is possible to improve sealability of a seal plate while suppressing an increase in manufacturing cost.

### Brief Description of Drawings

FIG. 1 is a schematic configuration diagram of a drive shaft according to an embodiment of the present invention.
FIG. 2 is a longitudinal sectional view of a plunging type constant velocity universal joint included in the drive shaft according to an embodiment of the present invention.
FIG. 3 is a transverse sectional view of the plunging type constant velocity universal joint according to an embodiment of the present invention.
FIG. 4 is a longitudinal sectional view of an outer joint member provided with a connection hole at one end in an axial direction.

### Description of Embodiments

Hereinafter, an embodiment of the present invention will be described by taking a drive shaft as an example of a power transmission mechanism mounted on an automobile as an example. Note that, in the drawings for describing the embodiments of the present invention, constituent elements such as members and constituent parts having the same function or shape are denoted by the same reference numerals as long as the constituent elements can be discriminated, and the description thereof will be omitted after being described once.

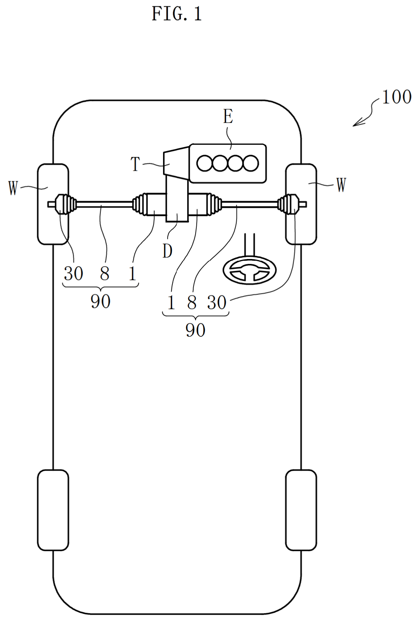

FIG. 1 is a schematic configuration diagram of a drive shaft according to an embodiment of the present invention.

In an automobile 100 illustrated in FIG. 1, a pair of drive shafts 90 is mounted as a power transmission mechanism that transmits rotational torque of an engine E as a drive source to right and left front wheels (wheels W) as drive wheels. The pair of drive shafts 90 mainly includes a shaft 8 as a power transmission shaft, a fixed type constant velocity universal joint 30 attached to an end portion on an outboard side (an outer side in a vehicle width direction or a wheel side) of the shaft 8, a plunging type constant velocity universal joint 1 attached to an inboard side (an inner side in the vehicle width direction or a differential side) of the shaft 8, and the like. The rotational torque of the engine E is changed in speed by a transmission T, is then distributed to the right and left drive shafts 90 by a differential D, and is transmitted to the wheels W.

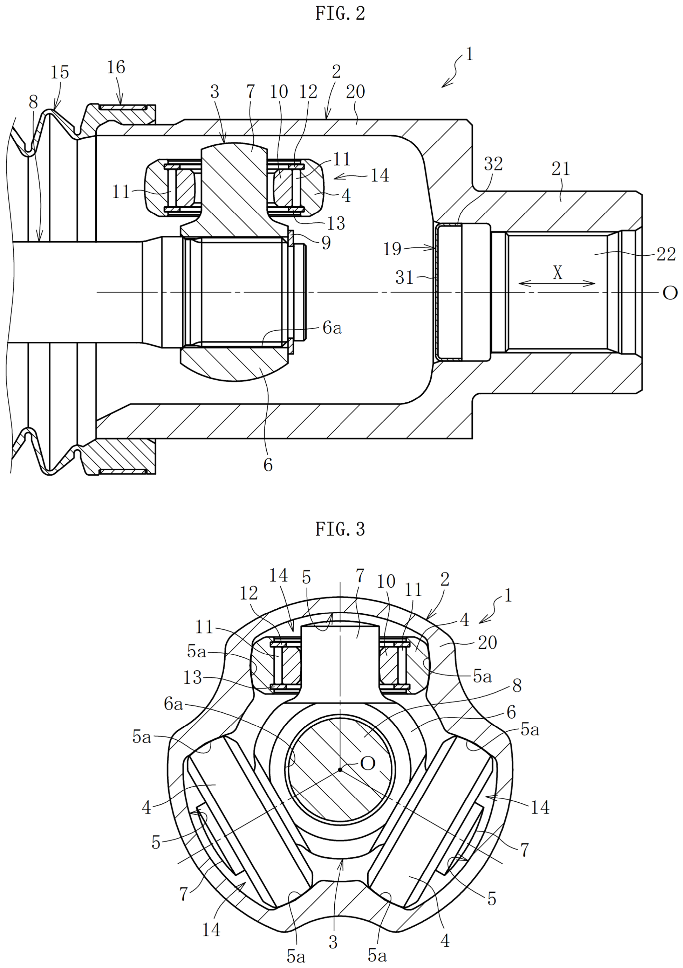

FIG. 2 is a longitudinal sectional view of a plunging type constant velocity universal joint included in the drive shaft according to an embodiment of the present invention, and FIG. 3 is a transverse sectional view of the plunging type constant velocity universal joint.

The plunging type constant velocity universal joint 1 illustrated in FIGS. 2 and 3 is a so-called tripod type constant velocity universal joint, and includes an outer joint member 2, a tripod member 3, rollers 4, a boot 15 (see FIG. 2), a seal plate 19 (see FIG. 2), and the like as main constituent elements.

Here, in the following description, the "axial direction" means a direction X (see FIG. 2) of a central axis O of the outer joint member 2 or any axis parallel thereto, and the "circumferential direction" means a circumferential direction of a circle centered on the central axis O of the outer joint member 2. A direction intersecting the axial direction (also including a direction orthogonal to the axial direction) will be referred to as a "radial direction".

As illustrated in FIG. 2, in the outer joint member 2, a large-diameter cylindrical portion 20 and a small-diameter cylindrical portion 21 having a smaller diameter than the large-diameter cylindrical portion 20 are integrally molded coaxially. On the inner diameter side of the small-diameter cylindrical portion 21, a connection hole 22 into which a driving shaft on the differential side, which is a mating member, is inserted is provided. Since the connection hole 22 is usually formed by broaching, the connection hole 22 is formed so as to pass through the small-diameter cylindrical portion 21 in the axial direction. Therefore, the internal spaces of the small-diameter cylindrical portion 21 and the large-diameter cylindrical portion 20 communicate with each other via the connection hole 22. A female spline to be fitted with a male spline provided on an outer peripheral surface of the driving shaft is provided on an inner peripheral surface of the connection hole 22. As a result, when the driving shaft is inserted into the connection hole 22 and the male spline of the driving shaft and the female spline of the connection hole 22 are fitted, the driving shaft and the outer joint member 2 are integrally rotatably connected.

As illustrated in FIG. 3, three track grooves 5 in which the rollers 4 are housed are provided at equal intervals in the circumferential direction on the inner peripheral surface of the large-diameter cylindrical portion 20 of the outer joint member 2. Each track groove 5 includes a pair of roller guide surfaces 5a that guide the rollers 4. Each track groove 5 and each roller guide surface 5a are formed to extend in the axial direction of the large-diameter cylindrical portion 20, and the roller 4 is configured to be reciprocable in the axial direction along the roller guide surface 5a.

The tripod member 3 as an inner joint member is housed on the inner diameter side of the large-diameter cylindrical portion 20 of the outer joint member 2. The tripod member 3 includes a boss portion 6 and three leg shafts 7 (see FIG. 3) protruding from the boss portion 6 in the radial direction. A female spline to be fitted with a male spline formed at an end portion of the shaft 8 is formed in a center hole 6a of the boss portion 6. Therefore, when the end portion of the shaft 8 is inserted into the center hole 6a and a male spline 8b and a female spline 6b are fitted to each other, the shaft 8 and the tripod member 3 are integrally rotatably connected. A stopper ring 9 (see FIG. 2) is attached to the end portion of the shaft 8 protruding from the center hole 6a, whereby the shaft 8 is prevented from falling off from the center hole 6a.

A roller unit 14 including the roller 4 is attached to each leg shaft 7 of the tripod member 3. Specifically, the roller unit 14 includes the roller 4 as an outer ring, an inner ring 10 disposed inside the roller 4 and externally fitted to the leg shaft 7, and a large number of needle-shaped rollers 11 interposed between the roller 4 and the inner ring 10. The roller 4, the inner ring 10, and the needle-shaped rollers 11 are assembled by washers 12 and 13 so as not to be separated from each other.

When the roller 4 moves in the axial direction along the roller guide surface 5a of the track groove 5, the tripod member 3 also moves in the axial direction, so that the axial displacement of the tripod member 3 with respect to the outer joint member 2 is allowed. Since the roller 4 is configured to be inclined with respect to the axis of the leg shaft 7, the angular displacement of the tripod member 3 with respect to the outer joint member 2 is also allowed. The roller 4 also functions as a torque transmitting member that transmits the rotational torque of the outer joint member 2 to the tripod member 3 when the outer joint member 2 rotates. As a result, the rotational torque of the engine E illustrated in FIG. 1 is transmitted to the right and left wheels W via the pair of drive shafts 90.

The boot 15 is a cylindrical member made of an elastic member such as rubber or resin, and is attached to the outer peripheral surface of the outer joint member 2. Specifically, the boot 15 is fastened and attached to the outer peripheral surface of the large-diameter cylindrical portion 20 by a boot band 16 so as to cover an opening on a side opposite to the small-diameter cylindrical portion 21 in the large-diameter cylindrical portion 20 of the outer joint member 2. As a result, the opening of the large-diameter cylindrical portion 20 on a side opposite to the small-diameter cylindrical portion 21 side is sealed.

The seal plate 19 is a lid-like member formed by press molding of a sheet metal plate or the like, and is attached so as to seal an opening on a side opposite to the opening of the large-diameter cylindrical portion 20 covered by the boot 15. Specifically, the seal plate 19 is press-fitted and fixed to the inner peripheral surface of the small-diameter cylindrical portion 21 on the large-diameter cylindrical portion 20 side. In this case, the seal plate 19 includes a disk-shaped sealing portion 31 that seals the opening of the small-diameter cylindrical portion 21, and a cylindrical press-fitting portion 32 that protrudes in the axial direction from a peripheral edge portion of the sealing portion 31. An outer peripheral surface of the press-fitting portion 32 is press-fitted into an inner peripheral surface of the small-diameter cylindrical portion 21, whereby the seal plate 19 is fixed in the outer joint member 2.

As described above, since the openings at both ends of the outer joint member 2 are sealed by the boot 15 and the seal plate 19, intrusion of foreign matter into the outer joint member 2 and leakage of a lubricant, such as grease, filled in the outer joint member 2 are prevented.

Here, in the configuration in which the seal plate is press-fitted into the outer joint member as in the plunging type constant velocity universal joint according to the embodiment of the present invention, when the outer peripheral surface of the seal plate is scratched at the time of press-fitting, there is a problem in that a lubricant leaks to the outside through the scratch or the base oil of the lubricant oozes out.

In general, the seal plate is often formed by pressing a cold-rolled steel plate such as SPCC from the viewpoint of moldability and manufacturing cost. On the other hand, the outer joint member is generally made of medium-carbon steel, high-carbon steel, or the like having a higher hardness than the seal plate. Therefore, when the seal plate is press-fitted into the outer joint member, if the seal plate is obliquely press-fitted or the seal plate is press-fitted again several times, the outer peripheral surface of the seal plate may be damaged due to contact with the outer joint member. When such a scratch occurs, sealability between the outer joint member and the seal plate is deteriorated, so that a lubricant, a base oil, or the like may leak to the outside. As a method for improving the sealability of the seal plate, there are methods such as addition of an O-ring, application of a liquid packing, and vulcanization bonding of a sealing material as described above, but any of these methods have a problem of causing an increase in manufacturing cost.

Therefore, in the present invention, the following seal plate is proposed in order to improve the sealability of the seal plate while suppressing an increase in manufacturing cost. Hereinafter, the configuration of the seal plate will be described by taking an embodiment of the present invention as an example.

In the embodiment according to the present invention, the seal plate is made of a material having a surface hardness higher than that of a conventional cold-rolled steel sheet (SPCC or the like). Thus, the surface hardness of the seal plate 19 is set to about 150 Hv. Here, for convenience, it is described as "about 150 Hv", but "about 150 Hv" means that the surface hardness is 140 Hv or more and 160 Hv or less. The same applies to the following description. The surface hardness (Hv) in the description of the present invention is hardness measured using a Vickers hardness tester specified in JIS standard (JIS Z 2244:2009). Examples of the material having a surface hardness of about 150 Hv include an austenitic stainless steel material.

Since the surface hardness of SPCC used as a material of a general seal plate is about 110 Hv, by setting the surface hardness of the seal plate to 150 Hv, the surface hardness of the seal plate can be increased by about 40 Hv as compared with the seal plate made of SPCC. As a result, the hardness difference between the inner peripheral surface of the outer joint member and the outer peripheral surface of the seal plate can be reduced.

For example, when carbon steel of S35C defined in JIS standards is used as the material of the outer joint member, the surface hardness thereof is a value of about 280 Hv or more and 350 Hv or less due to the influence of work hardening by cold forging. On the other hand, since the seal plate of the conventional product constituted by SPCC has a surface hardness of about 110 Hv, the hardness difference from the inner peripheral surface of the outer joint member is a value of about 170 Hv or more and 240 Hv or less. On the other hand, in the case of the seal plate according to the embodiment of the present invention, since the surface hardness is about 150 Hv (140 Hv or more and 160 Hv or less), the hardness difference from the inner peripheral surface of the outer joint member made of the same S35C is a value of about 130 Hv or more and 200 Hv or less, and the hardness difference can be reduced. That is, by setting the surface hardness of the seal plate to 150 Hv, the hardness difference between the outer peripheral surface of the press-fitting portion 32 of the seal plate 19 illustrated in FIG. 2 and the inner peripheral surface of the portion of the outer joint member 2 into which the press-fitting portion 32 is press-fitted can be set to 130 Hv or more and 200 Hv or less.

Note that, in the outer joint member, in addition to the outer peripheral surface, a portion of the inner peripheral surface where the track groove is provided and a portion of the connection hole where the female spline is provided are usually thermally cured by induction hardening or the like, but an inner peripheral surface of a portion where the seal plate is press-fitted is not thermally cured. Therefore, the hardness difference between the inner peripheral surface of the outer joint member and the outer peripheral surface of the seal plate usually means a difference between the hardness of the inner peripheral surface in the portion of the outer joint member not thermally cured and the hardness of the outer peripheral surface of the seal plate press-fitted into the inner peripheral surface.

As described above, in the embodiment of the present invention, by setting the surface hardness of the outer peripheral surface of the seal plate to a value of about 150 Hv, that is, 140 Hv or more and 160 Hv or less, the hardness difference between the inner peripheral surface of the outer joint member and the outer peripheral surface of the seal plate can be reduced. As a result, it is possible to suppress scratching of the outer peripheral surface of the seal plate due to contact between the outer peripheral surface of the seal plate and the inner peripheral surface of the outer joint member at the time of press-fitting. For example, as described above, by setting the hardness difference between the inner peripheral surface of the outer joint member and the outer peripheral surface of the seal plate to 130 Hv or more and 200 Hv or less, it is possible to effectively suppress scratching of the outer peripheral surface of the seal plate.

As described above, according to the present invention, since the occurrence of scratches on the outer peripheral surface of the seal plate can be suppressed, the sealability can be improved, and the leakage of a lubricant from the outer joint member to the outside can be highly suppressed. As a result, the reliability of the outer joint member including the seal plate, the constant velocity universal joint, and the power transmission mechanism is improved.

In the present invention, the sealability can be improved only by changing the material of the seal plate to a material having a high hardness without adding a component or adding a manufacturing process. Therefore, according to the present invention, manufacturing cost can be reduced as compared with a method of improving sealability by addition of an O-ring, application of a liquid packing, vulcanization bonding of a sealing material, or the like. Therefore, according to the present invention, it is possible to improve the sealability of the seal plate while suppressing an increase in manufacturing cost.

In the above-described embodiment, a case where the hardness difference between the inner peripheral surface of the outer joint member and the outer peripheral surface of the seal plate is 130 Hv or more and 200 Hv or less is exemplified, but the hardness difference is more preferably 130 Hv or more and 170 Hv or less. By setting the hardness difference to 130 Hv or more and 170 Hv or less, the outer peripheral surface of the seal plate is further less likely to be scratched, so that further improvement in sealability can be expected.

The seal plate is preferably a pressed product from the viewpoint of moldability and manufacturing cost, and in addition thereto, it is more preferable that the seal plate has a hardened layer whose surface has been subjected to a hard surface treatment such as a hard plating treatment. For example, the seal plate may include a base material that is a press-molded product of cold-rolled steel and a hard treatment layer formed on a surface of the base material.

When the seal plate includes a hardened layer on the surface, the hardened layer of the seal plate enters a minute gap between the outer joint member and the seal plate at the time of press-fitting, so that the gap can be filled. In general, since the inner peripheral surface of the outer joint member is formed by cutting, lead seams (fine cutting grooves) formed at the time of cutting exist on the inner peripheral surface. Therefore, when the seal plate is press-fitted into the inner peripheral surface of the outer joint member, lead seams may become a gap between the outer joint member and the seal plate, which may cause lubricant leakage. However, when the seal plate includes a hardened layer on the surface thereof, since the hardened layer of the seal plate enters a lead seam at the time of press-fitting so that a minute gap between the outer joint member and the seal plate can be filled, the sealability can be improved. As a result, leakage of a lubricant from the outer joint member can be more reliably suppressed. Note that the hardened layer of the seal plate may be formed in advance on the base material before press molding, or may be formed on the surface of the base material (press-molded product) after press molding.

Examples of the method of the hard surface treatment for forming the hardened layer on the seal plate include methods such as zinc plating, nickel plating, and zinc-based alloy plating.

Although the embodiments of the present invention have been described above, the present invention is not limited to the above-described embodiments, and can be appropriately modified without departing from the gist of the invention.

In the above-described embodiment, the drive shaft mounted on an automobile has been described as an example of the present invention; however, the present invention is also applicable to a power transmission mechanism used for other various industrial machines in addition to a drive shaft which is an example of a power transmission mechanism.

The plunging type constant velocity universal joint including the seal plate according to the present invention is not limited to the tripod type constant velocity universal joint as illustrated in FIGS. 2 and 3, and may be a double offset type constant velocity universal joint (DOJ) as in Patent Literature 1 including a ball as a torque transmitting member.

### Reference Signs List

- 1: Plunging type constant velocity universal joint

- 2: Outer joint member
- 3: Tripod member (inner joint member)
- 4: Roller (torque transmitting member)
- 8: Shaft
- 19: Seal plate
- 90: Drive shaft (power transmission mechanism)

## Claims

1. A seal plate (19) press-fitted and fixed to an inner peripheral surface of an outer joint member (2) for a constant velocity universal joint,
wherein an outer peripheral surface of the seal plate (19) in contact with the inner peripheral surface of the outer joint member (2) has a surface hardness of 140 Hv or more and 160 Hv or less.

2. The seal plate (19) according to claim 1, wherein a hardness difference between the inner peripheral surface of the outer joint member (2) and the outer peripheral surface of the seal plate (19) is 130 Hv or more and 200 Hv or less.

3. The seal plate (19) according to claim 1, wherein a hardness difference between the inner peripheral surface of the outer joint member (2) and the outer peripheral surface of the seal plate (19) is 130 Hv or more and 170 Hv or less.

4. The seal plate (19) according to claim 1, comprising a press-molded product including a hard treatment layer on a surface thereof.

5. The seal plate (19) according to claim 1, comprising:
a base material that is a press-molded product of cold-rolled steel; and
a hard treatment layer formed on a surface of the base material.

6. An outer joint member (2) for a constant velocity universal joint, wherein the seal plate (19) according to claim 1 is press-fitted into an inner peripheral surface.

7. A constant velocity universal joint comprising:
the outer joint member (2) according to claim 6;
an inner joint member (3) disposed inside the outer joint member (2); and
a torque transmitting member (4) that transmits torque between the outer joint member (2) and the inner joint member (3).

8. A power transmission mechanism comprising:
the constant velocity universal joint according to claim 7; and
a shaft (8) connected to an inner joint member (3) of the constant velocity universal joint.
